# EUROPÄISCHE PATENTSCHRIFT

(11) **EP 2 258 581 B1**
(45) Veröffentlichungstag und Bekanntmachung des Hinweises auf die Patenterteilung: **05.12.2018**
(21) Anmeldenummer: 10005779.3
(22) Anmeldetag: 03.06.2010
(51) Int. Cl.: B60L 11/18, H02M 3/158

(54) **Energieversorgungsschaltung für ein Flurförderzeug**
Energy supply circuit for an industrial truck
Circuit d'alimentation en énergie pour un chariot de manutention

(30) Priorität: 03.06.2009 DE 102009024362
(43) Veröffentlichungstag der Anmeldung: 08.12.2010
(73) Patentinhaber: Jungheinrich Aktiengesellschaft, 22047 Hamburg (DE)
(72) Erfinder: Maasland, Hans-Hermann, 25451 Quickborn (DE)
(74) Vertreter: Hauck Patentanwaltspartnerschaft mbB

(56) Entgegenhaltungen:
- DE-A1-102007 026 164
- JP-A- 2009 054 316
- US-A- 5 734 258
- US-B1- 7 319 306
- HAIMIN TAO ET AL: "Multiport converters for hybrid power sources", POWER ELECTRONICS SPECIALISTS CONFERENCE, 2008. PESC 2008. IEEE, IEEE, PISCATAWAY, NJ, USA, 15 June 2008 (2008-06-15), pages 3412-3418, XP031300486, ISBN: 978-1-4244-1667-7

## Beschreibung

Die Erfindung betrifft eine Energieversorgungsschaltung für ein Flurförderzeug. Zur Energieversorgung eines Flurförderzeugs wird in aller Regel eine wiederaufladbare Batterie verwendet. Um hohe Spitzenströme, beispielsweise beim Anfahren, bereitstellen zu können, ist es bekannt, parallel zur Batterie einen Kondensator vorzusehen.

Bei der Verwendung von Kondensatoren mit hoher Kapazität ist diese Anordnung jedoch problematisch. Einerseits führt der geringe Innenwiderstand von Kondensator und Batterie bei unterschiedlichem Ladezustand zu sehr großen Ausgleichsströmen, wenn eine unmittelbare Parallelschaltung erfolgt. Außerdem kann eine aus einer Parallelschaltung von Kondensator und Batterie gespeiste Energieversorgung erst nach Aufladen des Kondensators die benötigte Energie liefern. Es kommt daher nach Inbetriebnahme des Fahrzeugs zwangsläufig zu einer unerwünschten Wartezeit, bevor beispielsweise ein Anfahren möglich ist.

Aus der Druckschrift US 2007/0068714 A1 ist ein Hybridfahrzeug mit einem Verbrennungsmotor und einem elektrischen Antrieb bekannt, wobei der elektrische Antrieb aus zwei unterschiedlichen Energiequellen, nämlich einer Batterie und einem schnellen Energiespeichersystem, gespeist wird.

Aus der Druckschrift US 2008/0215200 A1 ist ein weiteres Hybridfahrzeug mit einem Verbrennungsmotor und einem elektrischen Antrieb bekannt, der aus einem primären und einem sekundären Energiespeicher versorgt wird.

Aus der Druckschrift US 2009/027933 A1 und dem US-Patent Nr. 6,066,928 sind Versorgungssysteme für elektrische Antriebe bekannt.

Die Druckschrift DE 10 2007 026 164 A1 beschreibt ein Kraftfahrzeug, insbesondere einen PKW, mit Verbrennungsmotor und einer Starterbatterie, die von einem UltraCap unterstützt wird. Das System dient zur Stromversorgung eines Startermotors, der nur für einen sehr kurzen Zeitraum eine hohe Leistung benötigt.

Das US-Patent Nr. 7,319,306 beschreibt ebenfalls ein Fahrzeug mit Verbrennungsmotor und einer Starterbatterie, die von einem UltraCap unterstützt wird.

Das US-Patent Nr. 5,734,258 beschreibt einen bidirektionalen Buck-Boost-Konverter, der die Versorgung eines Elektromotors über einen Inverter aus einem UltraCap ermöglicht.

Die Druckschrift JP 2009/054316A beschreibt ein elektrisch angetriebenes Fahrzeug mit einer Kombination aus einer Brennstoffzelle und eine Batterie oder einem UltraCap.

Die Veröffentlichung HAIMIN TAO ET AL: "Multiport converters for hybrid power sources",POWER ELECTRONICS SPECIALISTS CONFERENCE, 2008. PESC 2008. IEEE, IEEE, PISCATAWAY, NJ, USA, 15. Juni 2008 (2008-06-15), Seiten 3412-3418, XP031300486,ISBN: 978-1-4244-1667-7 beschreibt den Aufbau eines hybriden Antriebskonzepts, welches neben einer Brennstoffzelle die Verwendung einer Batterie mit einem DC/DC-Wandler und einen Traktionsmotor mit einem Inverter vorsieht, wobei dem Inverter ein Zwischenkreiskondensator zur Glättung der Spannung im Zwischenkreis vorgeschaltet ist.

Davon ausgehend ist es die Aufgabe der Erfindung, eine Energieversorgungsschaltung für ein Flurförderzeug zur Verfügung zu stellen, die eine Batterie und einen Kondensator mit hoher Kapazität kombiniert und ein verbessertes Energiemanagement ermöglicht.

Diese Aufgabe wird gelöst durch eine Energieversorgungsschaltung zur Versorgung eines Fahrantriebsmotors eines Flurförderzeugs mit elektrischer Energie gemäß Anspruch 1 sowie zwei Verfahren zum Betreiben der Energieversorgungsschaltung gemäß den Ansprüchen 5 und 11. Vorteilhafte Ausführungsformen sind in den abhängigen Ansprüchen definiert.

Die Energieversorgungsschaltung hat
- einen Batterieanschluss zur Verbindung mit dem positiven Kontakt einer Batterie,
- einen Kondensatoranschluss zur Verbindung mit dem positiven Kontakt eines Kondensators hoher Kapazität,
- einen Antriebssteuerungsanschluss, der mit dem Batterieanschluss und dem Kondensatoranschluss verbindbar ist, zur Verbindung mit einer Antriebssteuerung für einen Antriebsmotor des Flurförderzeugs,
- eine Reihenschaltung, die einen ersten elektronischen Schalter und eine Drossel aufweist und den Batterieanschluss mit dem Kondensatoranschluss verbindet,
- einen zweiten elektronischen Schalter, der ein Ende der Drossel mit Masse verbindet, und
- eine elektronische Steuereinheit, die zur Ansteuerung des ersten elektronischen Schalters und des zweiten elektronischen Schalters ausgebildet ist.

Batterie-, Kondensator- und Antriebssteuerungsanschluss können beispielsweise in Form lösbarer Steck-, Schraub- oder Klemmanschlüsse ausgeführt sein. Es ist jedoch auch jede andere, auch nicht-lösbare Form der Verbindung möglich. Über den Antriebssteuerungsanschluss wird ein Verbraucher, insbesondere ein Antriebsmotor des Flurförderzeugs, mit elektrischer Energie versorgt.

Der Batterieanschluss dient zur Verbindung mit dem positiven Kontakt einer Batterie. Dabei ist vorgesehen, den negativen Kontakt der Batterie wie üblich mit Masse zu verbinden. Der Kondensatoranschluss dient zur Verbindung mit dem positiven Kontakt eines Kondensators hoher Kapazität. Es ist vorgesehen, den anderen Kontakt des Kondensators ebenfalls mit Masse zu verbinden. Als positiver Kontakt des Kondensators wird der nicht mit Masse verbundene Kontakt bezeichnet. Dies setzt nicht voraus, dass der Kondensator eine vorgegebene Polarität aufweist. Hohe Kapazität bedeutet, dass der Kondensator aufgrund seines Speichervermögens als ergänzende Energiequelle zur Versorgung des Flurförderzeugs sinnvoll eingesetzt werden kann. Beispielsweise kann die Kapazität ein Farad oder mehr betragen.

Der Antriebssteuerungsanschluss ist mit dem Batterieanschluss und dem Kondensatoranschluss verbindbar, was eine ständige Verbindung insbesondere über eine Diode einschließt.

Der erste elektronische Schalter und die Drossel sind in der Reihenschaltung in Reihe geschaltet, sodass der Batterieanschluss durch Schließen des ersten elektronischen Schalters mit dem Kondensatoranschluss verbunden werden kann. Der zweite elektronische Schalter kann ein Ende der Drossel mit Masse verbinden, sodass ein Stromfluss durch die Drossel nach Masse oder umgekehrt durch Schließen des zweiten elektronischen Schalters möglich wird.

Die elektronischen Schalter sind bevorzugt Leistungstransistoren, insbesondere Bipolartransistoren mit isolierter Gate-Elektrode (insulated-gate bipolar transistor, IGBT) oder Metall-Oxid-Halbleiter-Feldeffekttransistoren (metal oxid semiconductor field effect transistor, MOSFET). Soweit im Folgenden davon die Rede ist, dass die elektronischen Schalter zwei Enden aufweisen, sind damit die beiden Anschlüsse eines Schalters gemeint, die durch Ansteuerung desselben elektrisch leitend miteinander verbunden werden, beispielsweise der Kollektor und Emitter eines bipolaren Transistors oder der Source- und Drain-Anschluss eines Feldeffekttransistors.

Die elektronische Steuereinheit ist zur Ansteuerung der elektronischen Schalter ausgebildet, d.h. sie ist insbesondere mit den Steuereingängen der elektronischen Schalter, bei den genannten Beispielen den Gate-Anschlüssen, elektrisch verbunden. Die elektronische Steuereinheit kann räumlich von dem übrigen Bestandteil der Energieversorgungsschaltung getrennt angeordnet sein, beispielsweise auf einer gesonderten Platine oder als Teil einer sonstigen Steuereinrichtung des Flurförderzeugs.

Bei geeigneter Ansteuerung der elektronischen Schalter ermöglicht die erfindungsgemäße Energieversorgungsschaltung einen planmäßigen Energietransport von der Batterie zum Kondensator oder umgekehrt. Die hierzu im Einzelnen möglichen Betriebsarten, die weiter unten näher erläutert werden, sehen dabei stets vor, in einem ersten Schritt einen Stromfluss aus einer der Energiequellen durch die Drossel zu erzeugen, wobei sich in der Drossel ein Magnetfeld aufbaut, in dem die zu transportierende Energie gespeichert ist. In einem zweiten Schritt wird ein Stromfluss aus der Drossel in die andere Energiequelle erzeugt, wobei sich das Magnetfeld in der Drossel abbaut und die darin gespeicherte Energie in Form des elektrischen Stroms in die andere Energiequelle transportiert wird. Erster und zweiter Schritt werden abwechselnd wiederholt, sodass ein im Wesentlichen stetiger Energietransport erfolgt. Durch die Zwischenspeicherung der zu transportierenden Energie im Magnetfeld der Drossel kann ein Energietransport zwischen Batterie und Kondensator erfolgen, der weitgehend unabhängig von den am Kondensator und an der Batterie vorliegenden Spannungsverhältnissen ist. Insbesondere ist es möglich, die Energieversorgungsschaltung im Boost-Verfahren zu betreiben und als Boost-Konverter, auch bekannt als Hochsetzsteller, zu verwenden. Dabei kann beispielsweise der Kondensator aus der Batterie bis zu einer Spannung aufgeladen werden, die größer ist als die Batteriespannung, oder umgekehrt. Ebenfalls möglich ist ein Betreiben der Energieversorgungsschaltung im sogenannten Buck-Verfahren, wobei die Energieversorgungsschaltung als Buck-Konverter, auch bekannt als Tiefsetzsteller, betrieben wird. Dabei erfolgt der Energietransport durch die Drossel von einem höheren zu einem niedrigeren Spannungsniveau hin.

Ein weiterer Vorteil der Energieversorgungsschaltung ist, dass das Flurförderzeug unmittelbar nach Inbetriebnahme betriebsbereit ist, und ein Ladevorgang des Kondensators parallel zum Betrieb des Flurförderzeugs erfolgen kann. Hierzu kann der Antriebssteuerungsanschluss mit dem Batterieanschluss verbunden werden, sodass die Antriebssteuerung unabhängig vom Ladezustand des Kondensators unmittelbar aus der Batterie versorgt werden kann. Gleichzeitig kann ein Aufladen des Kondensators durch den beschriebenen Energietransport vom Batterieanschluss zum Kondensatoranschluss erfolgen.

In einer bevorzugten Ausgestaltung ist der Kondensator hoher Kapazität ein Doppelschichtkondensator. Doppelschichtkondensatoren bestehen aus zwei mit einem Elektrolyten benetzten Elektroden. Sie sind auch unter den Bezeichnungen "Gold Caps", "Super Caps", "Boost Caps" oder "Ultra Caps" bekannt. Sie zeichnen sich durch eine besonders hohe Energiedichte aus.

In einer Ausgestaltung ist ein erstes Schütz vorhanden, das eine Verbindung zum positiven Kontakt der Batterie trennen kann, und/oder ein zweites Schütz, das eine Verbindung zum positiven Kontakt des Kondensators trennen kann. Die beiden Schütze können auch als ein einziges Schütz mit vier jeweils paarweise verbindbaren Polen ausgeführt sein. Die Schütze erlauben eine Trennung der Batterie und/oder des Kondensators von der Energieversorgungsschaltung oder von sämtlichen Verbrauchern des Flurförderzeugs. Die Schütze werden beispielsweise durch Drehen eines Schlüssels bei Inbetriebnahme des Flurförderzeugs geschlossen.

Bei der Erfindung sind der Batterieanschluss und der Kondensatoranschluss über jeweils einen weiteren elektronischen Schalter mit dem Antriebssteuerungsanschluss verbunden. Grundsätzlich kann die erforderliche Verbindbarkeit von Batterieanschluss und Kondensatoranschluss mit dem Antriebssteuerungsanschluss auch auf andere Weise, beispielsweise durch jeweils eine Diode, realisiert werden. Bei der Verwendung von zwei Dioden, deren Kathoden mit dem Antriebssteuerungsanschluss verbunden werden, erfolgt automatisch eine Versorgung der Antriebssteuerung aus derjenigen Energiequelle, die eine größere Spannung aufweist. Bei der Verwendung von zwei elektronischen Schaltern, die bevorzugt ebenfalls von der elektronischen Steuereinheit angesteuert werden, kann demgegenüber unabhängig von den Spannungen der Batterie und des Kondensators gezielt eine der beiden Energiequellen zur Versorgung der Antriebssteuerung genutzt werden. Wegen des gegenüber der Diodenlösung geringeren Spannungsabfalls an den weiteren elektronischen Schaltern können zudem Verluste reduziert werden. Ein anderer, wesentlicher Vorteil ist, dass auch eine Rückspeisung vom Antriebssteuerungsanschluss in die Batterie bzw. in den Kondensator möglich ist. Bei der Rückspeisung kann insbesondere ein Antriebsmotor des Flurförderzeugs als Generator betrieben werden, sodass die beim Bremsen frei werdende Energie zurückgewonnen werden kann. Gerade bei der Rückspeisung treten sehr hohe Ströme auf. Durch die Möglichkeit, den Antriebssteuerungsanschluss gezielt entweder mit der Batterie oder dem Kondensator zu verbinden, kann die zurückgewonnene Energie in intelligenter Weise den zur Verfügung stehenden Speichermedien zugeordnet werden. Beispielsweise kann bei einer Rückspeisung relativ geringer Ströme unmittelbar die Batterie aufgeladen werden, während bei einer Rückspeisung sehr großer Ströme, die wegen der begrenzten, möglichen Ladeströme der Batterie nicht unmittelbar der Batterie zugeführt werden können, eine Speicherung der Energie im Kondensator erfolgen kann. Anschließend kann die im Kondensator zwischengespeicherte Energie aus der Rückspeisung mit einem wählbaren Ladestrom in der bereits beschriebenen Weise über die Drossel der Batterie zugeführt werden.

Bei der Erfindung ist der erste elektronische Schalter ein bidirektionaler elektronischer Schalter. Ein bidirektionaler Schalter ermöglicht einen Stromfluss in beide Richtungen. Dadurch wird ein Energieaustausch zwischen Kondensator und Batterie in beiden Richtungen ermöglicht.

Bei der Erfindung ist der bidirektionale elektronische Schalter von zwei in Reihe geschalteten elektronischen Schaltern gebildet. Dabei ist insbesondere vorgesehen, bei der Verwendung von Transistoren für die elektronischen Schalter die internen Dioden der Transistoren in entgegengesetzter Richtung zu schalten.

Gemäß einer Ausgestaltung ist ein Ende der Drossel mit dem Batterieanschluss verbunden. Grundsätzlich kann die Drossel an beliebiger Stelle in der Reihenschaltung mit dem ersten elektronischen Schalter angeordnet sein. Bei Verbindung eines Endes der Drossel mit dem Batterieanschluss ist ein "magnetisches Aufladen" der Drossel aus der Batterie sowohl im Boost- als auch im Buck-Verfahren möglich. Die Ausgestaltung bietet sich daher insbesondere an, um einen Energietransport von der Batterie zum Kondensator zu ermöglichen. Insbesondere kann der Kondensator im Boost-Verfahren bis zu einer über der Batteriespannung liegenden Spannung aufgeladen werden. Dadurch können kurzzeitig große elektrische Leistungen, etwa beim Anfahren, aus dem Kondensator zur Verfügung gestellt werden.

Bei der Erfindung ist ein Ende eines der elektronischen Schalter des bidirektionalen elektronischen Schalters mit dem Kondensatoranschluss und ein Ende des anderen elektronischen Schalters des bidirektionalen elektronischen Schalters mit dem Batterieanschluss verbunden und die beiden anderen Enden der beiden elektronischen Schalter des bidirektionalen elektronischen Schalters sind mit jeweils einem Ende der Drossel verbunden, wobei ein Ende der Drossel zusätzlich mit dem mit Masse verbundenem zweiten elektronischen Schalter verbunden ist und das andere Ende der Drossel zusätzlich mit einem weiteren mit Masse verbundenen elektronischen Schalter verbunden ist. Die beiden elektronischen Schalter des bidirektionalen elektronischen Schalters und die beiden mit Masse verbundenen elektronischen Schalter sind demnach symmetrisch auf beiden Seiten der Drossel zwischen dem Kondensatoranschluss und dem Batterieanschluss angeordnet. Wie weiter unten im Einzelnen erläutert wird, ermöglicht diese symmetrische Anordnung einen Energietransport von der Batterie zum Kondensator und umgekehrt sowohl im Boost- als auch im Buck-Verfahren. Die Energieversorgungsschaltung kann daher außerordentlich flexibel eingesetzt werden. Die beiden elektronischen Schalter des bidirektionalen elektronischen Schalters sind über die Drossel miteinander verbunden und in der Reihenschaltung angeordnet, sodass ein Stromfluss durch die Drossel in beiden Richtungen zwischen Batterieanschluss und Kondensatoranschluss geschaltet werden kann.

Erfindungsgemäß umfasst die Energieversorgungsschaltung eine Antriebssteuerung für einen Antriebsmotor des Flurförderzeugs. Bevorzugt handelt es sich um eine Drehstrom-Antriebssteuerung für einen Asynchronmotor. Eine derartige Drehstrom-Antriebssteuerung umfasst insbesondere drei zwischen Masse und dem Antriebssteuerungsanschluss angeordnete Transistorbrücken, an deren Mitte jeweils eine Phase des Asynchronmotors angeschlossen ist. Eine derartige Antriebssteuerung kann optimal über die Energieversorgungsschaltung versorgt werden und ermöglicht insbesondere die weiter oben erläuterte Rückspeisung bei einem generatorischen Betrieb des Asynchronmotors.

In einer Ausgestaltung ist die Energieversorgungsschaltung als Modul gefertigt. Sie kann dann einfach montiert und gewartet und für unterschiedliche Fahrzeugtypen verwendet werden.

Die eingangs genannte Aufgabe wird ebenfalls gelöst durch das Verfahren zum Betreiben einer Energieversorgungsschaltung nach einem der Ansprüche 1 bis 4 mit den Merkmalen des Anspruchs 5. Das Verfahren betrifft eine Betriebsart zum Aufladen eines an den Kondensatoranschluss angeschlossenen Kondensators aus einer an den Batterieanschluss angeschlossenen Batterie oder umgekehrt, bei dem die elektronische Steuereinheit die elektronischen Schalter so ansteuert, dass
- in einem ersten Schritt ein Strom aus der Batterie oder aus dem Kondensator durch die Drossel nach Masse fließt und sich in der Drossel ein Magnetfeld aufbaut,
- in einem zweiten Schritt ein Strom durch die Drossel in den Kondensator bzw. in die Batterie fließt, wobei sich das Magnetfeld in der Drossel abbaut, und
- der erste und zweite Schritt wiederholt werden.

Das Verfahren umfasst insbesondere einen dem ersten und zweiten Schritt vorausgehenden Verfahrensschritt, in dem eine Energieversorgungsschaltung nach einem der Ansprüche 1 bis 4 bereitgestellt wird.

Das Verfahren beschreibt die Verwendung der Energieversorgungsschaltung als Boost-Konverter. Das "magnetische Aufladen" der Drossel durch einen aus einer der beiden Energiequellen nach Masse fließenden Strom ist unabhängig von den Spannungsverhältnissen der beiden Energiequellen möglich. Daher kann beim "Entladen der Drossel" im zweiten Schritt ein höheres Spannungsniveau in der aufzuladenden Energiequelle erreicht werden, als in der zum Aufladen der Drossel herangezogenen Energiequelle.

Die sich an Anspruch 5 anschließenden Unteransprüche betreffen unterschiedliche Betriebsarten des Verfahrens nach Anspruch 5. Sie werden weiter unten bei der Diskussion der Ausführungsbeispiele näher erläutert.

In einer Ausgestaltung des Verfahrens werden ein mit dem Kondensatoranschluss verbundener elektronischer Schalter und ein weiterer mit Masse verbundener elektronischer Schalter jeweils für einen ersten Zeitraum und ein mit dem Batterieanschluss verbundener elektronischer Schalter und ein zweiter elektronischer Schalter jeweils für einen zweiten Zeitraum geschlossen, wobei das aus dem ersten Zeitraum und dem zweiten Zeitraum gebildete Tastverhältnis die Richtung des Energieflusses vom Kondensatoranschluss zum Batterieanschluss bzw. umgekehrt bestimmt. Es ist vorgesehen, während der Zeiträume, zu denen eines der genannten Paare elektronischer Schalter geschlossen ist, das jeweils andere Paar zu öffnen und umgekehrt. Die gewünschte Richtung des Energieflusses stellt sich nach Maßgabe des Tastverhältnisses automatisch ein.

In einer Ausgestaltung der genannten Verfahren wird der Kondensator oder die Batterie bis zu einer Spannung aufgeladen, die größer ist als die Batteriespannung bzw. die Kondensatorspannung. Wie bereits erläutert, ist dies bei Verwendung des Boost-Verfahrens möglich. Ein Aufladen des Kondensators bis zu einer über der Batteriespannung liegenden Spannung bietet den Vorteil, eine zusätzliche Leistungsreserve zur Verfügung zu stellen. Ein Aufladen der Batterie bis zu einer Spannung, die größer ist als die Kondensatorspannung, ermöglicht insbesondere die im Kondensator gespeicherte elektrische Energie annähernd vollständig zum Aufladen der Batterie auszunutzen. Wenn der Kondensator aus der Batterie aufgeladen wird, erfolgt bevorzugt ein Aufladen bis zu einer Spannung am Kondensator, die zwischen 10% und 80% größer ist als die Batteriespannung. Besonders bevorzugt wird ein Aufladen bis zu einer Spannung im Bereich zwischen 20% und 50% oberhalb der Batteriespannung.

Die obige Aufgabe wird ebenfalls gelöst durch das Verfahren zum Betreiben einer Energieversorgungsschaltung nach einem der Ansprüche 1 bis 4 mit den Merkmalen des Anspruchs 11. Das Verfahren betrifft eine Betriebsart zum Aufladen eines an den Kondensatoranschluss angeschlossenen Kondensators aus einer an den Batterieanschluss angeschlossenen Batterie oder umgekehrt, wobei die elektronische Steuereinheit die elektronischen Schalter so ansteuert, dass
- in einem ersten Schritt ein Strom aus der Batterie durch die Drossel in den Kondensator fließt oder umgekehrt, wobei sich in der Drossel ein Magnetfeld aufbaut,
- in einem zweiten Schritt ein Strom durch den zweiten elektronischen Schalter und die Drossel in den Kondensator bzw. in die Batterie fließt, wobei sich das Magnetfeld in der Drossel abbaut, und
- der erste und zweite Schritt wiederholt werden.

Dem ersten und zweiten Verfahrensschritt geht ein Verfahrensschritt voraus, in dem eine Energieversorgungsschaltung nach einem der Ansprüche 1 bis 4 zur Verfügung gestellt wird.

Durch die genannten Verfahrens schritte wird ein Energietransport im Buck-Verfahren zwischen Kondensator und Batterie durchgeführt. Der erste Verfahrensschritt setzt dabei voraus, dass die zum "magnetischen Aufladen" der Drossel eingesetzte Energiequelle ein höheres Spannungsniveau aufweist als die Energiequelle, zu der die Energie transportiert werden soll. Auch dieses Verfahren ermöglicht einen planmäßigen Energietransport mit einem durch die Ansteuerung der elektronischen Schalter steuerbaren Ladestrom.

Die sich an Anspruch 11 anschließenden Unteransprüche betreffen die Ansteuerung der elektronischen Schalter in unterschiedlichen Betriebsarten des Verfahrens. Sie werden weiter unten bei der Erläuterung der zugehörigen Ausführungsbeispiele im Einzelnen beschrieben.

In einer Ausgestaltung aller beschriebenen Verfahren werden die elektronischen Schalter so angesteuert, dass sich ein kontinuierlicher Stromfluss durch die Drossel einstellt. Ein Betrieb der Energieversorgungsschaltung in diesem, sogenannten "continuous current mode (CCM)" setzt insbesondere eine Ansteuerung der elektronischen Schalter mit einer ausreichenden Taktfrequenz voraus. Der Vorteil eines im Wesentlichen kontinuierlichen Stromflusses besteht in der Minimierung von Verlusten und in der Möglichkeit, alle stromführenden Elemente der Energieversorgungsschaltung relativ gering zu dimensionieren.

Die Erfindung wird nachfolgend anhand von zwei in Figuren beschriebenen Ausführungsbeispielen näher erläutert. Es zeigen:
- Fig. 1: ein erstes Beispiel einer Energieversorgungsschaltung, das nicht der Erfindung entspricht,
- Fig. 2: einen Ausschnitt der Energieversorgungsschaltung aus Figur 1 mit Strompfeilen, die ein Aufladen des Kondensators aus der Batterie im Boost-Verfahren veranschaulichen,
- Fig. 3: einen Ausschnitt der Schaltung aus Figur 1 mit Strompfeilen, die ein Aufladen der Batterie aus dem Kondensator im Buck-Verfahren veranschaulichen,
- Fig. 4: ein Ausführungsbeispiel einer Energieversorgungsschaltung,
- Fign. 5-10: jeweils einen Ausschnitt der Schaltung aus Figur 4 mit Strompfeilen, die unterschiedliche Betriebsarten der Schaltung veranschaulichen,
- Fig. 11: ein Diagramm mit Strom- und Spannungsverläufen in der Drossel und an den Steuereingängen elektronischer Schalter bei der Ausführung eines erfindungsgemäßen Verfahrens,
- Fig. 12: Spannungs- und Stromverläufe im Rückspeisebetrieb einer Energieversorgungsschaltung nach Figur 4.

In den Figuren werden sich entsprechende Teile unterschiedlicher Ausführungsbeispiele mit denselben Bezugszeichen bezeichnet.

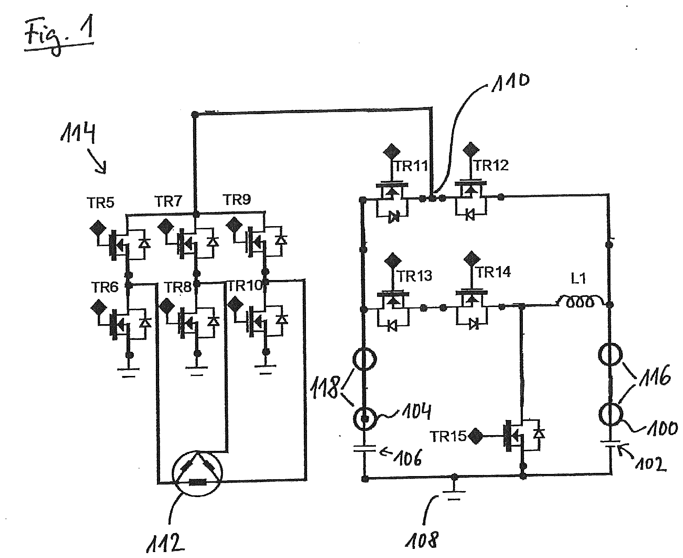

Die in der Figur 1 gezeigte Energieversorgungsschaltung für ein Flurförderzeug weist einen Batterieanschluss 100 zur Verbindung mit dem positiven Kontakt einer Batterie 102 und einen Kondensatoranschluss 104 zur Verbindung mit dem positiven Kontakt eines Kondensators 106 auf, der eine hohe Kapazität hat. Im Beispiel ist der Kondensator 106 ein Doppelschichtkondensator mit einer Kapazität von mindestens einem Farad, vorzugsweise von mehr als 100 Farad. Der negative Kontakt der Batterie 102 und der nicht mit dem Kondensatoranschluss 104 verbundene Kontakt des Kondensators 106 sind mit Masse 108 verbunden.

Ein erstes Schütz 116 ist in der Figur durch seine beiden durch das Schütz miteinander zu verbindenden und voneinander zu trennenden Kontakte dargestellt. Mit dem ersten Schütz 116 kann die Batterie 102 von der Energieversorgungsschaltung getrennt und mit dieser verbunden werden. Ein zweites Schütz 118 ist ebenfalls durch seine beiden Kontakte dargestellt. Es dient zum Verbinden bzw. Trennen des Kondensators 106 mit/von der Energieversorgungsschaltung.

Der Kondensatoranschluss 104 und der Batterieanschluss 100 sind über eine Reihenschaltung miteinander verbunden, die einen ersten elektronischen Schalter und eine Drossel L1 aufweist. Der erste elektronische Schalter ist ein bidirektionaler elektronischer Schalter, der von zwei elektronischen Schaltern TR13, TR14 gebildet wird. Wie in der Figur dargestellt, handelt es sich bei den elektronischen Schaltern TR13 und TR14 um MOSFET-Transistoren. Die Enden der Transistoren TR13 und TR14 sind so angeordnet, dass die internen Dioden der Transistoren in entgegengesetzter Richtung in der Reihenschaltung angeordnet sind. Ein Ende des Transistors TR13 ist mit dem Kondensatoranschluss 104 verbunden, das andere Ende des Transistors TR13 ist mit einem Ende des Transistors TR14 verbunden, das andere Ende des Transistors TR14 ist mit einem Ende der Drossel L1 und mit einem Ende eines zweiten elektronischen Schalters TR15, der ebenfalls von einem MOSFET-Transistor gebildet wird, verbunden. Das andere Ende des zweiten elektronischen Schalters TR15 ist mit Masse verbunden. Das nicht mit den elektronischen Schaltern TR14 und TR15 verbundene Ende der Drossel L1 ist mit dem Batterieanschluss 100 verbunden.

Die Energieversorgungsschaltung weist zwei weitere elektronische Schalter TR11 und TR12 auf, die ebenfalls von MOSFET-Transistoren gebildet werden. Ein Ende des elektronischen Schalters TR11 ist mit dem Kondensatoranschluss 104 verbunden. Ein Ende des elektronischen Schalters TR12 ist mit dem Batterieanschluss 100 verbunden. Die beiden anderen Enden der elektronischen Schalter TR11 und TR12 sind miteinander und mit einem Antriebssteuerungsanschluss 110 verbunden, der zur Verbindung mit einer Antriebssteuerung 114 für einen Drehstrom-Antriebsmotor 112 des Flurförderzeugs dient. Die beiden elektronischen Schaltern TR11 und TR12 sind so angeordnet, dass die Kathoden ihrer internen Dioden mit dem Antriebssteuerungsanschluss 110 verbunden sind.

Die Drehstrom-Antriebsmotorsteuerung weist sechs weitere elektronische Schalter TR5 bis TR10 in Form von MOSFET-Transistoren auf, von denen jeweils ein Paar eine nach Masse führende Brücke bildet. Die Mittelpunkte jeder Brücke sind jeweils mit einer Phase des Drehstrom-Antriebsmotors 112 verbunden.

Jeder elektronische Schalter ist mit einem in der Figur durch ein auf der Spitze stehendes Quadrat angedeuteten Steuereingang ausgestattet. Die Steuereingänge der elektronischen Schalter TR11 bis TR15 sind mit einer nicht dargestellten elektronischen Steuereinheit verbunden, die zur Ansteuerung der genannten elektronischen Schalter ausgebildet ist. Die Steuereingänge der elektronischen Schalter TR5 bis TR10 können von einer gesonderten Steuereinrichtung angesteuert werden.

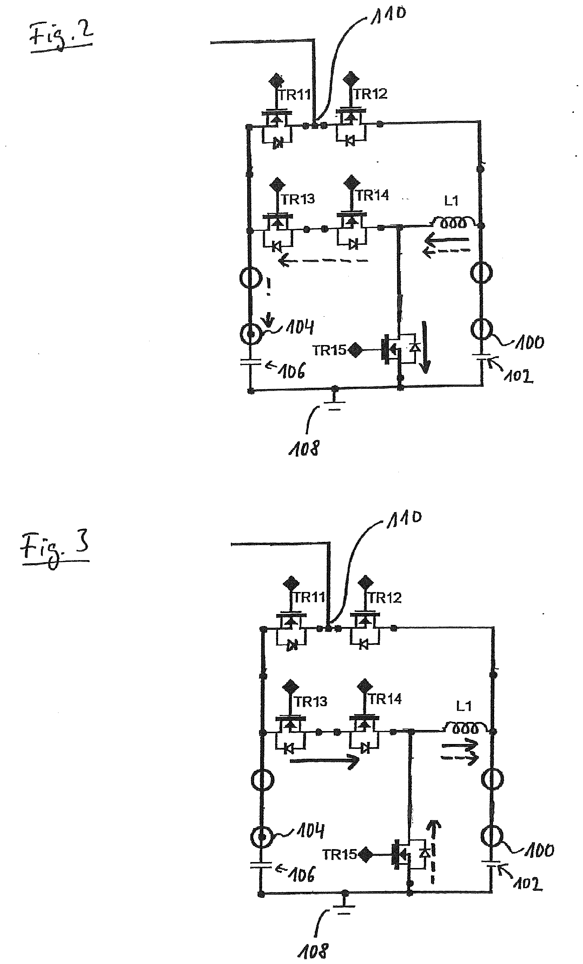

Anhand der Figur 2 soll die Ansteuerung des ersten und des zweiten elektronischen Schalters in einer Betriebsart zum Aufladen des Kondensators aus der Batterie im Boost-Verfahren erläutert werden. Dabei werden in einem ersten Verfahrensschritt die elektronischen Schalter TR13 und TR14 geöffnet und der elektronische Schalter TR15 geschlossen, was einen Stromfluss entlang der durchgezogenen Pfeile von der Batterie 102 durch die Drossel L1 und den elektronischen Schalter TR15 zur Folge hat. Durch den Stromfluss bildet sich in der Drossel L1 ein Magnetfeld aus, in dem Energie gespeichert ist. Im zweiten Verfahrensschritt werden die elektronischen Schalter TR13 und TR14 geschlossen und der elektronische Schalter TR15 geöffnet. Dies führt zu einem Stromfluss in Richtung der gestrichelten Pfeile in der Figur 2, d.h. von der Drossel L1 durch den bidirektionalen elektronischen Schalter TR13, TR14 in den Kondensator 106. Bei dem geschilderten Verfahren kann der Kondensator 106 ohne weiteres bis zu einer höheren Spannung aufgeladen werden als die Spannung der Batterie 102.

Zum Ausführen der in Figur 2 illustrierten Betriebsart zum Aufladen des Kondensators ist es nicht unbedingt erforderlich, dass der erste elektronische Schalter ein bidirektionaler elektronischer Schalter ist. Es kann auch ein einfacher elektronischer Schalter TR14 verwendet werden, der mit einer Diode anstelle des Transistors TR13 kombiniert wird. Diese Diode ist so anzuordnen, wie die in der Figur dargestellte interne Diode des elektronischen Schalters TR13.

Figur 3 veranschaulicht den Betrieb der Energieversorgungsschaltung aus Figur 1 in einer Betriebsart zum Aufladen der Batterie aus dem Kondensator im Buck-Verfahren. Dabei wird in einem ersten Verfahrens schritt der bidirektionale elektronische Schalter TR13, TR14 geschlossen und der zweite elektronische Schalter TR15 geöffnet. Ein
Stromfluss entlang der durchgezogenen Pfeile durch den bidirektionalen elektronischen Schalter und die Drossel L1 ist die Folge, wobei die Drossel L1 "magnetisch aufgeladen" wird. Im zweiten Verfahrensschritt wird der bidirektionale elektronische Schalter TR13, TR14 geöffnet und der zweite elektronische Schalter TR15 wird geschlossen. Dies führt zu einem Stromfluss entlang der gestrichelten Pfeile, bei dem der die Batterie 102 und die Drossel L1 enthaltende Stromkreis durch den zweiten elektronischen Schalter geschlossen wird. Für diesen Verfahrensschritt ist es nicht unbedingt erforderlich, den zweiten elektronischen Schalter TR15 zu schließen. Der Stromfluss kann auch im Freilauf durch dessen interne Diode erfolgen. Bevorzugt erfolgt jedoch eine synchrone Ansteuerung des elektronischen Schalters TR15, um Leistungsverluste an der Diode zu vermeiden.

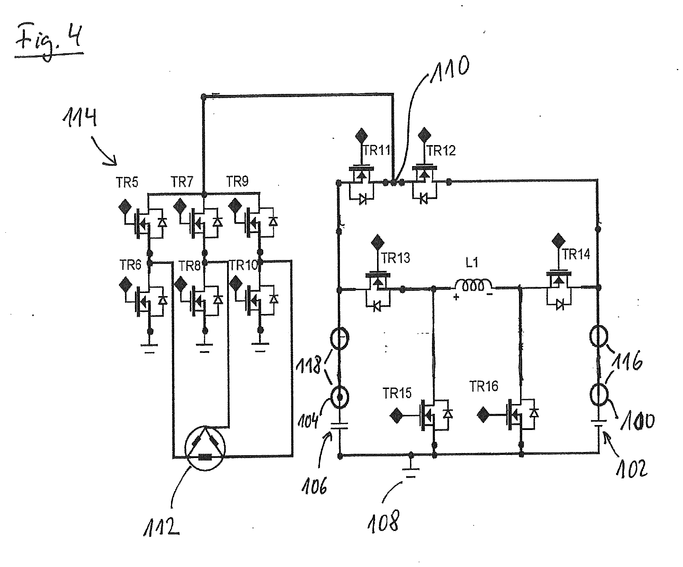

Das in der Figur 4 dargestellte Ausführungsbeispiel einer Energieversorgungsschaltung gleicht hinsichtlich des Batterieanschlusses 102, des Kondensatoranschlusses 106, des Antriebssteuerungsanschlusses 110, des ersten Schützes 116 und des zweiten Schützes 118, der Drehstrom-Antriebssteuerung 114 mit Asynchronmotor 112 und der weiteren elektronischen Schalter TR11 und TR12 dem ersten Ausführungsbeispiel. Die dortigen Erläuterungen gelten auch für das zweite Ausführungsbeispiel. Abweichend ausgeführt ist die Reihenschaltung zwischen dem Kondensatoranschluss 104 und dem Batterieanschluss 100. Hier sind die beiden elektronischen Schalter TR13 und TR14 des bidirektionalen elektronischen Schalters nicht unmittelbar, sondern über die Drossel L1 miteinander verbunden. Das andere Ende des elektronischen Schalters TR13 ist mit dem Kondensatoranschluss 104 verbunden. Das andere Ende des elektronischen Schalters TR14 ist mit dem Batterieanschluss 100 verbunden. Der zweite elektronische Schalter TR15 ist an einem Ende mit Masse 108 verbunden, mit dem anderen Ende mit dem Verbindungspunkt zwischen einem Ende des elektronischen Schalters TR13 und der Drossel L1. Darüber hinaus gibt es einen weiteren elektronischen Schalter TR16, dessen eines Ende mit Masse 108 und dessen anderes Ende mit dem Verbindungspunkt zwischen einem Ende der Drossel L1 und einem Ende des elektronischen Schalters TR14 verbunden ist. Wie in der Figur zu erkennen, ergibt sich eine symmetrische Anordnung der elektronischen Schalter TR13 bis TR16 um die

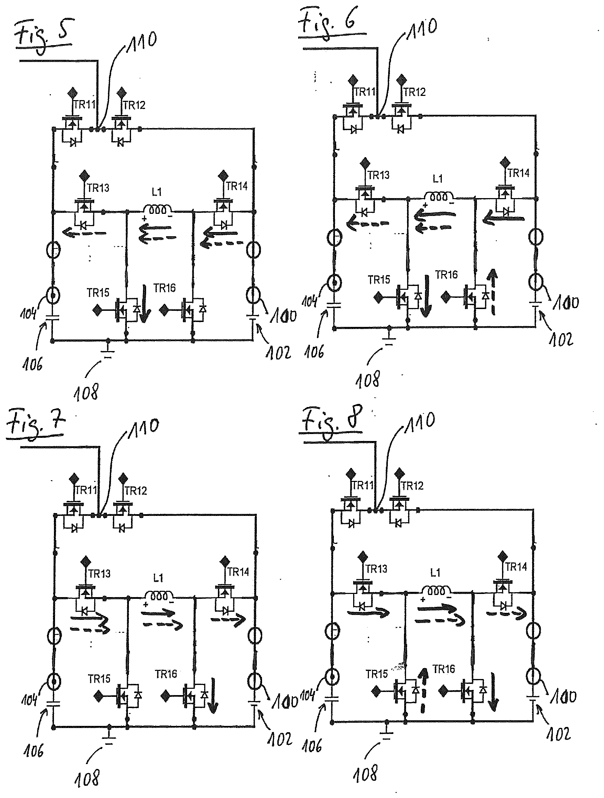

Drossel L1 herum. Die Energieversorgungsschaltung gemäß Figur 4 ermöglicht einen flexiblen Energieaustausch zwischen Kondensator 106, Batterie 102 und Antriebssteuerung 114. Die im Einzelnen möglichen Betriebsarten werden anhand der Figuren 5 bis 10 erläutert.

Figur 5 betrifft eine Betriebsart der Energieversorgungsschaltung zum Aufladen des Kondensators aus der Batterie in einem ersten Boost-Verfahren. Dabei wird im ersten Verfahrens schritt der elektronische Schalter TR13 geöffnet und der elektronische Schalter TR14 geschlossen, der elektronische Schalter TR15 geschlossen und der elektronische Schalter TR16 geöffnet. Dies führt zu einem Stromfluss entlang der durchgezogenen Pfeile, bei dem die Drossel L1 "magnetisch aufgeladen" wird. Der Strom fließt dabei von der Batterie 102 durch die Drossel L1 nach Masse 108. Im zweiten Schritt wird der elektronische Schalter TR13 geschlossen, der elektronische Schalter TR14 geschlossen, der elektronische Schalter TR15 geöffnet und der elektronische Schalter TR16 geöffnet. Der Strom fließt dann, wie durch die gestrichelten Pfeile dargestellt, durch die Drossel L1 über den elektronischen Schalter TR13 in den Kondensator 106. Dabei ist das nicht mit dem Kondensator 106 verbundene Ende der Drossel L1 über den elektronischen Schalter TR14 mit der Batterie 102 verbunden und weist ein der Batteriespannung entsprechendes Bezugspotential auf.

Eine Alternative des Verfahrens aus Figur 5 ist in der Figur 6 dargestellt. Gezeigt ist das Aufladen des Kondensators aus der Batterie in einem zweiten Boost-Verfahren. Der erste Verfahrensschritt gleicht dem in Verbindung mit Figur 5 beschriebenen. Der Strom fließt entlang der durchgezogenen Pfeile. Im zweiten Verfahrensschritt wird der elektronische Schalter TR13 geschlossen, der elektronische Schalter TR14 geöffnet, der elektronische Schalter TR 15 geöffnet und der elektronische Schalter TR16 geschlossen. Der Strom fließt dann entlang der gestrichelten Pfeile, d.h. von Masse 108 durch den elektronischen Schalter TR16, die Drossel L1 und den elektronischen Schalter TR13 zum Kondensator 106. Im Unterschied zu dem im Zusammenhang mit Figur 5 erläuterten Verfahren befindet sich das nicht mit dem Kondensator 106 verbundene Ende der Drossel L1 demnach im zweiten Verfahrensschritt, in dem die Drossel L1 entladen wird, nicht auf dem Potential des positiven Batteriekontakts, sondern ist mit Masse verbunden. Diese Lösung bietet gegenüber dem zuerst beschriebenen Boost-Verfahren (Figur 5) den Vorteil, dass in der Regel, d.h. wenn Kondensator 106 und Batterie 102 vergleichbare Spannungen aufweisen, beispielsweise eine Batteriespannung von 24 Volt einer Spannung von 20 Volt am Kondensator 106 gegenübersteht, in beiden Verfahrensschritten, d.h. beim "Aufladen" und beim "Entladen" der Drossel L1 etwa gleich große Spannungen an der Drossel L1 anliegen (im Beispiel ca. 24 Volt beim Auflade- und 20 Volt beim Entladevorgang). Daher kann die in der Drossel L1 gespeicherte Energie bei vergleichbarer Stromstärke etwa in der gleichen Zeit entladen wie aufgeladen werden. Dies führt zu einem etwa symmetrischen Tastverhältnis, d.h. zu vergleichbaren Einschaltzeiten der jeweiligen Transistorpaarungen in den beiden Verfahrensschritten. Dabei bestimmt das Tastverhältnis die Richtung des Energieflusses zwischen Kondensatoranschluss 104 und Batterieanschluss 100. Das Paar elektronischer Schalter TR14 und TR15 wird für einen längeren Zeitraum angesteuert als das Paar elektronischer Schalter TR13 und TR16. Beispielsweise kann das erstgenannte Paar elektronischer Schalter für 70 % der gesamten Taktzeit angesteuert werden. In diesem Fall stellt sich ein Energiefluss von der Batterie 102 zum Kondensator 106 ein.

Figur 7 betrifft den Betrieb der Energieversorgungsschaltung aus Figur 4 in einer Betriebsart zum Aufladen der Batterie aus dem Kondensator analog dem vorstehend erläuterten, ersten Boost-Verfahren. Dabei wird im ersten Schritt der elektronische Schalter TR13 geschlossen, der elektronische Schalter TR14 geöffnet, der elektronische Schalter TR15 geöffnet und der elektronische Schalter TR16 geschlossen. Ein Stromfluss entlang der durchgezogenen Pfeile ist die Folge. Im zweiten Schritt werden die elektronischen Schalter TR13, TR14 geschlossen und die elektronischen Schalter TR15, TR16 geöffnet. Der Strom fließt nun entlang der gestrichelten Pfeile.

Figur 8 betrifft das Aufladen der Batterie aus dem Kondensator in einem zweiten Boost-Verfahren, das analog zu dem beim Aufladen des Kondensators aus der Batterie erläuterten, zweiten Boost-Verfahren abläuft. Der erste Verfahrensschritt gleicht dem in Zusammenhang mit der Figur 7 erläuterten Verfahrensschritt, wobei der Strom entlang der durchgezogenen Pfeile fließt. Im zweiten Verfahrensschritt wird der elektronische Schalter TR13 geöffnet, der elektronische Schalter TR14 geschlossen, der elektronische Schalter TR15 geschlossen und der elektronische Schalter TR16 geöffnet. Der Strom fließt nun entlang der gestrichelten Pfeile. Das Tastverhältnis wird so gewählt, dass das Paar elektronischer Schalter TR13 und TR16 für einen längeren Zeitraum geschlossen wird, als das Paar elektronischer Schalter TR14 und TR15. Beispielsweise kann das erstgenannte Paar elektronischer Schalter für 70 % der gesamten Taktzeit geschlossen werden. Es stellt sich dann ein Energiefluss vom Kondensator 106 zur Batterie 102 ein.

In allen auf die Figur 4 bezogenen Ausführungsbeispielen ist eine einfache Art einer pulsweitenmodulierten Ansteuerung (PWM) verwirklicht. Wie bei einer Vollbrückenschaltung (H-Schaltung) werden die Paare elektronischer Schalter TR14 und TR15 jeweils gleichzeitig eingeschaltet, während das Paar elektronischer Schalter TR13 und TR16 gleichzeitig ausgeschaltet sind, und umgekehrt. Das Tastverhältnis bestimmt die Energieflussrichtung.

Für alle in diesen Anmeldungen beschriebenen Energieversorgungsschaltungen können integrierte Treiber-ICs für Halbbrückenschaltungen zur Ansteuerung verwendet werden.

Bei allen in Zusammenhang mit den Figuren 5 bis 8 beschriebenen Betriebsarten kann in der Drossel L1 ein weitgehend kontinuierlicher Stromfluss aufrechterhalten werden. Es erfolgt daher ein stetiger Energietransport von der Batterie 102 zum Kondensator 106 oder umgekehrt. Liegt in der Drossel L1 aufgrund eines vorhergehenden Betriebszustands ein Stromfluss vor, der der Richtung des vorgesehenen Energietransports entgegengesetzt ist, muss unter Umständen ein Abklingen des Stroms oder ein Richtungswechsel des Stroms in der Drossel L1 abgewartet werden, bevor mit dem Energietransport begonnen werden kann.

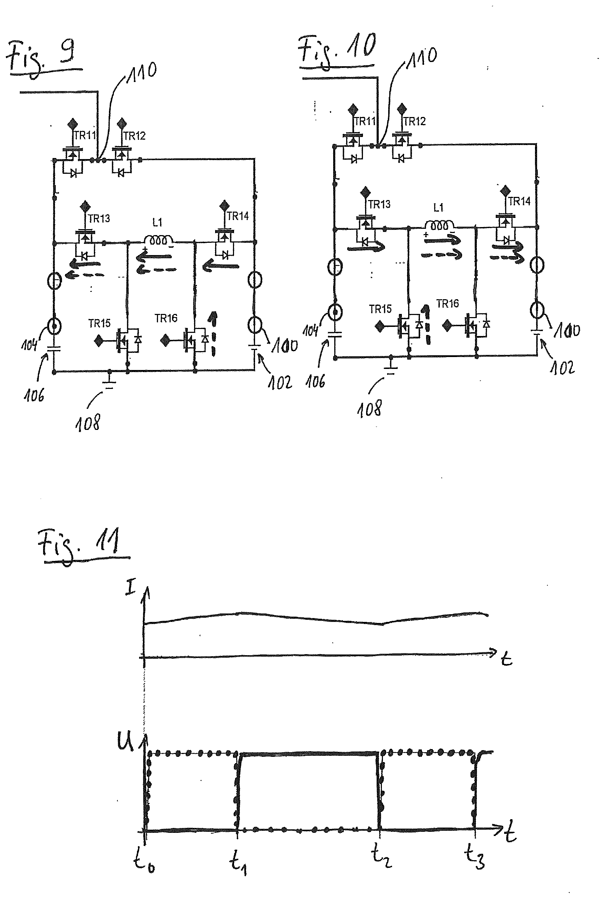

Eine weitere Betriebsart der Energieversorgungsschaltung aus Figur 4 ist in der Figur 9 dargestellt. Sie betrifft ein Aufladen des Kondensators aus der Batterie im Buck-Verfahren. Dabei ist im ersten Verfahrensschritt der elektronische Schalter TR13 geschlossen, der elektronische Schalter TR14 ist geschlossen und die elektronischen Schalter TR15 und TR16 sind geöffnet. Der Strom fließt entlang der durchgezogenen Pfeile, d.h. von der Batterie 102 durch den elektronischen Schalter TR14, die Drossel L1 und den elektronischen Schalter TR13 in den Kondensator 106. Voraussetzung für diesen Stromfluss ist, dass die Batterie 102 eine höhere Spannung aufweist als der Kondensator 106. Im zweiten Verfahrensschritt wird der elektronische Schalter TR13 geschlossen, die elektronischen Schalter TR14 und TR15 werden geöffnet und der elektronische Schalter TR16 wird geschlossen. Der Strom fließt dann entlang der gestrichelten Pfeile, d.h. von Masse 108 durch den elektronischen Schalter TR16, die Drossel L1 und den elektronischen Schalter TR13 in den Kondensator 106.

Figur 10 betrifft das Aufladen der Batterie aus dem Kondensator im Buck-Verfahren. Der Zustand der elektronischen Schalter im ersten Verfahrensschritt gleicht dem des in Verbindung mit der Figur 9 beschriebenen. Der Strom fließt allerdings in entgegengesetzter Richtung, d.h. vom Kondensator 106 zur Batterie 102. Voraussetzung hierfür ist, dass die Spannung am Kondensator 106 höher ist als an der Batterie 102. Im zweiten Verfahrensschritt wird der elektronische Schalter TR13 geöffnet, die elektronischen Schalter TR14 und TR15 werden geschlossen, und der elektronische Schalter TR16 wird geöffnet. Der Strom fließt, wie durch die gestrichelten Pfeile gezeigt, von Masse 108 über den elektronischen Schalter TR15, die Drossel L1 und den elektronischen Schalter TR14 in die Batterie 102.

Figur 11 zeigt im oberen Teil den Verlauf des Stroms durch die Drossel L1 und im unteren Teil den Verlauf der Spannung an den Steuereingängen der elektronischen Schalter TR13 bis TR16 beispielhaft beim Betrieb der Energieversorgungsschaltung der Figur 4 in der in Verbindung mit Figur 6 erläuterten Betriebsart, aufgetragen über eine gemeinsame Zeitachse.

Wie der untere Teil des Diagramms erkennen lässt, werden die Transistoren TR15 und TR14 während der Zeitspanne zwischen t₀ und t₁ durchgeschaltet, was durch die punktierte Linie, die die Spannung an den jeweiligen Steuereingängen wiederspiegelt, dargestellt ist. In dieser Zeitspanne steigt der Strom, dargestellt im oberen Teil des Diagramms, der durch die Drossel L1 fließt, kontinuierlich an. Dabei baut sich das im Bereich der Drossel L1 bestehende Magnetfeld auf bzw. verstärkt sich. In der sich anschließenden Zeitspanne vom Zeitpunkt t₁ bis zum Zeitpunkt t₂ werden die Transistoren TR13 und TR16 durchgeschaltet, wie durch die stärkere, durchgezogene Linie im unteren Teil des Diagramms dargestellt. In diesem Zeitintervall nimmt der Strom durch die Drossel L1, dargestellt im oberen Teil des Diagramms, langsam und stetig ab. In dieser Phase baut sich dementsprechend das Magnetfeld im Bereich der Drossel L1 zumindest teilweise ab. In der nachfolgenden Zeitspanne zwischen dem Zeitpunkt t₂ und t₃ wiederholen sich die mit Bezug auf das erste Zeitintervall zwischen dem Zeitpunkt t₀ und t₁ beschriebenen Vorgänge. Es zeigt sich, dass ein kontinuierlicher Stromfluss durch die Drossel L1 und damit ein kontinuierlicher Energietransport von der Batterie 102 zum Kondensator 106 stattfindet. Es zeigt sich ebenfalls, dass die Zeitintervalle der einander abwechselnden Verfahrensschritte der einander abwechselnden ersten und zweiten Verfahrensschritte eine vergleichbare Länge aufweisen.

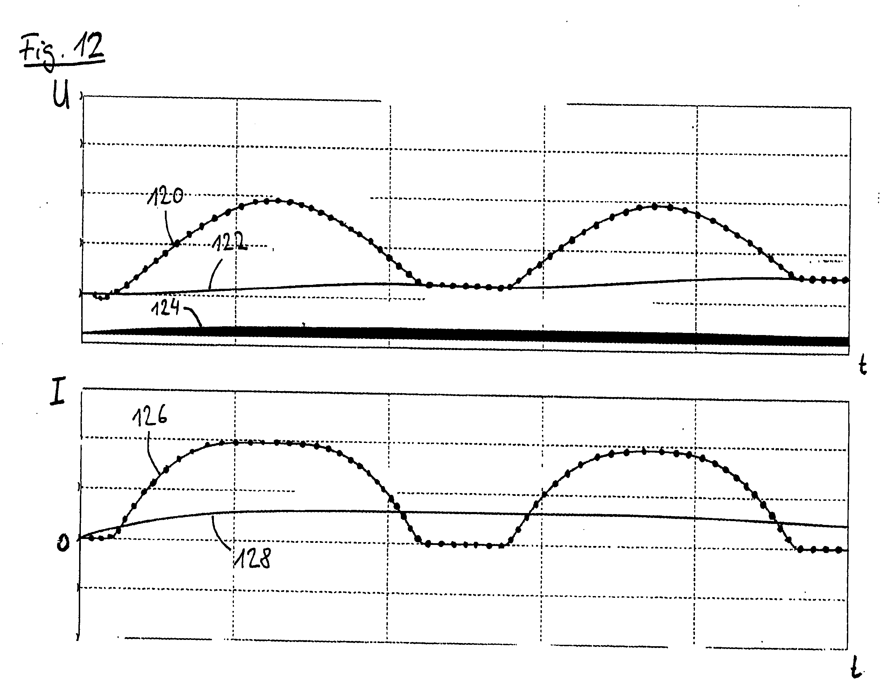

Die Figur 12 zeigt zwei Diagramme mit einer gemeinsamen Zeitachse. Die Ausdehnung des Zeitabschnitts liegt im Sekundenbereich. Die dargestellten Spannungs- und Stromverläufe betreffen eine Betriebsart, in der Strom vom Motor zurück in den Kondensator und die Batterie eingespeist wird.

Im oberen Diagramm ist der Spannungsverlauf am Motor eines Flurförderzeugs als mit Punkten versehene Linie 120 dargestellt. Die durchgezogene Linie 122 gibt den Verlauf der Spannung am Kondensator 106 wieder. Der Verlauf der Batteriespannung ist durch die obere Begrenzungslinie 124 der im Diagramm erkennbaren Fläche dargestellt. Der im oberen Diagramm dargestellte Spannungsbereich ist willkürlich gewählt. In der Praxis kann die Batteriespannung 124 beispielsweise in der Größenordnung von 24 Volt liegen. Die Spannung 122 am Kondensator kann beispielsweise in einem Bereich zwischen 30 und 40 Volt liegen, und die Spannung 120 am Motor kann beispielsweise Spitzenwerte von 50 Volt oder mehr annehmen.

Im unteren Teil des Diagramms ist als mit Punkten versehene Linie 126 der Motorrückspeisestrom aufgetragen, d.h. der über den Antriebssteuerungsanschluss 110 in die Energieversorgungsschaltung eingespeiste Strom, der im generatorischen Betrieb des Motors 112 beim Abbremsen erzeugt wird. Die durchgezogene Linie 128 im unteren Diagramm gibt den Ladestrom in die Batterie wieder.

Zu Beginn des dargestellten Zeitabschnitts ist der Motorrückspeisestrom 126 gleich Null. Gleichzeitig befindet sich die Kondensatorspannung 122 deutlich oberhalb der Batteriespannung 124, sodass mit Hilfe der Energieversorgungsschaltung ein Ladestrom vom Kondensator 106 in die Batterie 102 erzeugt werden kann. Dieser führt zu einem langsamen Anstieg der Batteriespannung 124. Liegt am Motor eine hohe Spannung 120 an und kann ein entsprechend hoher Motorrückspeisestrom durch den elektronischen Schalter TR11 eingespeist werden, wird dieser zunächst in den Kondensator 106 geleitet. Dadurch steigt die Spannung 122 am Kondensator während der Zeitabschnitte, in denen ein relativ großer Rückspeisestrom 126 vorliegt, kontinuierlich an. Der Rückspeisestrom aus dem Motor 126 kann beispielsweise 200 Ampere oder mehr betragen. Mit Hilfe der Energieversorgungsschaltung wird ein Teil des Rückspeisestroms vom Kondensator 106 über die Drossel L1 in die Batterie 102 eingespeist. Der Ladestrom 128 kann beispielsweise 70 Ampere betragen. Er ist an das Aufnahmevermögen der Batterie 102 angepasst und kann durch geeignete Ansteuerung der Batterieversorgungsschaltung vorgegeben werden.

Etwa in der Mitte des Diagramms fällt die Motorspannung 120 und damit auch der Motorrückspeisestrom 126 zeitweise auf Null. Auch innerhalb dieser Zeitspanne kann ein annähernd konstanter Ladestrom 128 aufrechterhalten werden, der durch einen Energietransport vom Kondensator 106 in die Batterie 102 bewirkt wird.

Alternativ zu dem geschilderten Ladevorgang der Batterie kann insbesondere in einer Situation, in der die Kapazität des Kondensators zur Aufnahme der rückgespeisten Energie - beispielsweise während des Abfahrens einer längeren Rampe mit dem Flurförderzeug - nicht ausreicht, durch eine geeignete Ansteuerung des elektronischen Schalters TR12 ein Teil des Rückspeisestroms unmittelbar in die Batterie 102 eingespeist werden. Hierzu kann der elektronische Schalter TR12 beispielsweise über eine Pulsweitenmodulierung mit einer Strombegrenzung angesteuert werden, was eine Regelung des Ladestroms ermöglicht. Diese alternative Ansteuerung der Energieversorgungsschaltung hat einen Sicherheitsaspekt, weil die am Kondensator 106 auftretenden Spannungen auch bei einer länger andauernden Rückspeisung aus dem Motor begrenzt werden können.

Alle erläuterten Ausführungsbeispiele der Energieversorgungsschaltung können zur Ansteuerung der elektronischen Schalter eine Pulsweitenmodulation (PWM) anwenden.

## Patentansprüche

1. Energieversorgungsschaltung zur Versorgung eines Fahrantriebsmotors eines Flurförderzeugs mit elektrischer Energie mit
• einem Batterieanschluss (100) zur Verbindung mit dem positiven Kontakt einer Batterie (102),
• einem Kondensatoranschluss (104),
• einem Antriebssteuerungsanschluss (110), der mit einer Antriebssteuerung (114) für einen Antriebsmotor (112) des Flurförderzeugs verbunden und mit dem Batterieanschluss (100) und dem Kondensatoranschluss (104) verbindbar ist, **dadurch gekennzeichnet, dass**
• der Kondensatoranschluss (104) mit einem positiven Kontakt eines Kondensators (106) mit einer hohen Kapazität von 1 Farad oder mehr verbunden ist,
• der Batterieanschluss (100) und der Kondensatoranschluss (104) über jeweils einen elektronischen Schalter (TR11, TR12) mit dem Antriebssteuerungsanschluss (110) verbunden sind, und durch
• eine Reihenschaltung, die einen bidirektionalen, von zwei in Reihe geschalteten elektronischen Schaltern (TR13, TR14) gebildeten ersten elektronischen Schalter (TR13, TR14) und eine Drossel (L1) aufweist und den Batterieanschluss (100) mit dem Kondensatoranschluss (104) verbindet, wobei ein Ende eines der elektronischen Schalter (TR13) des bidirektionalen ersten elektronischen Schalters mit dem Kondensatoranschluss (104) und ein Ende des anderen elektronischen Schalters (TR14) des bidirektionalen ersten elektronischen Schalters mit dem Batterieanschluss (100) verbunden ist und die beiden anderen Enden der beiden elektronischen Schalter (TR13, TR14) des bidirektionalen ersten elektronischen Schalters mit jeweils einem Ende der Drossel (L1) verbunden sind,
• wobei ein Ende der Drossel (L1) zusätzlich mit einem mit Masse verbundenen zweiten elektronischen Schalter (TR15) verbunden ist und das andere Ende der Drossel (L1) zusätzlich mit einem weiteren mit Masse verbundenen elektronischen Schalter (TR16) verbunden ist, und
• eine elektronischen Steuereinheit, die zur Ansteuerung des ersten elektronischen Schalters (TR13, TR14), des zweiten elektronischen Schalters (TR15) und des weiteren mit Masse verbundenen elektronischen Schalters (TR16) ausgebildet ist.

2. Energieversorgungsschaltung nach Anspruch 1, **dadurch gekennzeichnet, dass** ein erstes Schütz (116) vorhanden ist, das eine Verbindung zum positiven Kontakt der Batterie (102) trennen kann, und/oder ein zweites Schütz (118), das eine Verbindung zum positiven Kontakt des Kondensators (106) trennen kann.

3. Energieversorgungsschaltung nach Anspruch 1 oder 2, **dadurch gekennzeichnet, dass** die Antriebssteuerung (114) eine Drehstrom-Antriebssteuerung (114) für einen Asynchronmotor (112) ist.

4. Energieversorgungsschaltung nach einem der Ansprüche 1 bis 3, **dadurch gekennzeichnet, dass** sie als Modul gefertigt ist.

5. Verfahren zum Betreiben einer Energieversorgungsschaltung nach einem der Ansprüche 1 bis 4 in einer Betriebsart zum Aufladen des an den Kondensatoranschluss (104) angeschlossenen Kondensators (106) aus einer an den Batterieanschluss (100) angeschlossenen Batterie (102) oder umgekehrt, bei dem eine Energieversorgungsschaltung nach einem der Ansprüche 1 bis 4 zur Verfügung gestellt wird und die elektronische Steuereinheit die elektronischen Schalter so ansteuert, dass
• in einem ersten Schritt ein Strom aus der Batterie (102) oder aus dem Kondensator (106) durch die Drossel (L1) nach Masse (108) fließt und sich in der Drossel (L1) ein Magnetfeld aufbaut,
• in einem zweiten Schritt ein Strom durch die Drossel (L1) in den Kondensator (106) bzw. in die Batterie (102) fließt, wobei sich das Magnetfeld in der Drossel (L1) abbaut, und
• der erste und zweite Schritt wiederholt werden.

6. Verfahren nach Anspruch 5, **dadurch gekennzeichnet, dass** in einer Betriebsart zum Aufladen des Kondensators (106) aus der Batterie (102)
• im ersten Schritt der mit dem Kondensatoranschluss (104) verbundene elektronische Schalter (TR13) geöffnet, der mit dem Batterieanschluss (100) verbundene elektronische Schalter (TR14) geschlossen, der zweite elektronische Schalter (TR15) geschlossen und der weitere mit Masse (108) verbundene elektronische Schalter (TR16) geöffnet wird und
• im zweiten Schritt der mit dem Kondensatoranschluss (104) verbundene elektronische Schalter (TR13) geschlossen, der mit dem Batterieanschluss (100) verbundene elektronische Schalter (TR14) geschlossen, der zweite elektronische Schalter (TR15) geschlossen und der weitere mit Masse (108) verbundene elektronische Schalter (TR16) geöffnet wird.

7. Verfahren nach Anspruch 5, **dadurch gekennzeichnet, dass** in einer Betriebsart zum Aufladen der Batterie (102) aus dem Kondensator (106)
• im ersten Schritt der mit dem Kondensatoranschluss (104) verbundene elektronische Schalter (TR13) geschlossen, der mit dem Batterieanschluss (100) verbundene elektronische Schalter (TR14) geöffnet, der zweite elektronische Schalter (TR15) geöffnet und der weitere mit Masse (108) verbundene elektronische Schalter (TR16) geschlossen wird und
• im zweiten Schritt der mit dem Kondensatoranschluss (104) verbundene elektronische Schalter (TR13) geschlossen, der mit dem Batterieanschluss (100) verbundene elektronische Schalter (TR14) geschlossen, der zweite elektronische Schalter (TR15) geöffnet und der weitere mit Masse (108) verbundene elektronische Schalter (TR16) geöffnet wird.

8. Verfahren nach Anspruch 5, **dadurch gekennzeichnet, dass** in einer Betriebsart zum Aufladen des Kondensators (106) aus der Batterie (102)
• im ersten Schritt der mit dem Kondensatoranschluss (104) verbundene elektronische Schalter (TR13) geöffnet, der mit dem Batterieanschluss (100) verbundene elektronische Schalter (TR14) geschlossen, der zweite elektronische Schalter (TR15) geschlossen und der weitere mit Masse (108) verbundene elektronische Schalter (TR16) geöffnet wird und
• im zweiten Schritt der mit dem Kondensatoranschluss (104) verbundene elektronische Schalter (TR13) geschlossen, der mit dem Batterieanschluss (100) verbundene elektronische Schalter (TR14) geöffnet, der zweite elektronische Schalter (TR15) geöffnet und der weitere mit Masse verbundene elektronische Schalter (TR16) geschlossen wird.

9. Verfahren nach Anspruch 5, **dadurch gekennzeichnet, dass** in einer Betriebsart zum Aufladen der Batterie (102) aus dem Kondensator (106)
• im ersten Schritt der mit dem Kondensatoranschluss (104) verbundene elektronische Schalter (TR13) geschlossen, der mit dem Batterieanschluss (100) verbundene elektronische Schalter (TR14) geöffnet, der zweite elektronische Schalter (TR15) geöffnet und der weitere mit Masse (108) verbundene elektronische Schalter (TR16) geschlossen wird und
• im zweiten Schritt der mit dem Kondensatoranschluss verbundene elektronische Schalter (TR13) geöffnet, der mit dem Batterieanschluss verbundene elektronische Schalter (TR14) geschlossen, der zweite elektronische Schalter (TR15) geschlossen und der weitere mit Masse (108) verbundene elektronische Schalter (TR16) geöffnet wird.

10. Verfahren nach Anspruch 8 oder 9, **dadurch gekennzeichnet, dass** der mit dem Kondensatoranschluss (104) verbundene elektronische Schalter (TR13) und der weitere mit Masse (108) verbundene elektronische Schalter (TR16) jeweils für einen ersten Zeitraum und der mit dem Batterieanschluss verbundene elektronische Schalter (TR14) und der zweite elektronische Schalter (TR15) jeweils für einen zweiten Zeitraum geöffnet werden, wobei das aus dem ersten Zeitraum und dem zweiten Zeitraum gebildete Tastverhältnis die Richtung des Energieflusses vom Batterieanschluss (100) zum Kondensatoranschluss (104) bzw. umgekehrt bestimmt.

11. Verfahren zum Betreiben einer Energieversorgungsschaltung nach einem der Ansprüche 1 bis 4 in einer Betriebsart zum Aufladen des an den Kondensatoranschluss (104) angeschlossenen Kondensators (106) aus einer an den Batterieanschluss (100) angeschlossenen Batterie (102) oder umgekehrt, bei dem eine Energieversorgungsschaltung nach einem der Ansprüche 1 bis 4 zur Verfügung gestellt wird und die elektronische Steuereinheit die elektronischen Schalter so ansteuert, dass
• in einem ersten Schritt ein Strom aus der Batterie durch die Drossel (L1) in den Kondensator (106) fließt oder umgekehrt, wobei sich in der Drossel (L1) ein Magnetfeld aufbaut,
• in einem zweiten Schritt ein Strom durch den zweiten elektronischen Schalter (TR15) und die Drossel (L1) in den Kondensator (106) bzw. in die Batterie (102) fließt, wobei sich das Magnetfeld in der Drossel (L1) abbaut, und
• der erste und zweite Schritt wiederholt werden.

12. Verfahren nach Anspruch 11, **dadurch gekennzeichnet, dass** in einer Betriebsart zum Aufladen des Kondensators (106) aus der Batterie (102)
• im ersten Schritt der mit dem Kondensatoranschluss (104) verbundene elektronische Schalter (TR13) geschlossen, der mit dem Batterieanschluss (100) verbundene elektronische Schalter (TR14) geschlossen, der zweite elektronische Schalter (TR15) geöffnet und der weitere mit Masse (108) verbundene elektronische Schalter (TR16) geöffnet wird und
• im zweiten Schritt der mit dem Kondensatoranschluss (104) verbundene elektronische Schalter (TR13) geschlossen, der mit dem Batterieanschluss (100) verbundene elektronische Schalter (TR14) geöffnet, der zweite elektronische Schalter (TR15) geöffnet und der weitere mit Masse (108) verbundene elektronische Schalter (TR16) geschlossen wird.

13. Verfahren nach Anspruch 11, **dadurch gekennzeichnet, dass** in einer Betriebsart zum Aufladen der Batterie (102) aus dem Kondensator (106)
• im ersten Schritt der mit dem Kondensatoranschluss (104) verbundene elektronische Schalter (TR13) geschlossen, der mit dem Batterieanschluss (100) verbundene elektronische Schalter (TR14) geschlossen, der zweite elektronische Schalter (TR15) geöffnet und der weitere mit Masse (108) verbundene elektronische Schalter (TR16) geöffnet wird und
• im zweiten Schritt der mit dem Kondensatoranschluss (104) verbundene elektronische Schalter (TR13) geöffnet, der mit dem Batterieanschluss (100) verbundene elektronische Schalter (TR14) geschlossen, der zweite elektronische Schalter (TR15) geschlossen und der weitere mit Masse (108) verbundene elektronische Schalter (TR16) geöffnet wird.

14. Verfahren nach einem der Ansprüche 5 bis 13, **dadurch gekennzeichnet, dass** die elektronischen Schalter so angesteuert werden, dass sich ein kontinuierlicher Stromfluss durch die Drossel (L1) einstellt.

## Claims

1. An energy supply circuit for supplying a travel driving motor of an industrial truck with electrical energy, having
• a battery connection (100) for connection to the positive contact of a battery (102),
• a condenser connection (104),
• a drive control connection (110) which is connected to a drive control (114) for a driving motor (112) of the industrial truck and which can be connected to the battery connection (100) and the condenser connection (104), **characterized in that**
• the condenser connection (104) is connected to a positive contact of a condenser (106) with a high capacity of 1 Farad or more,
• the battery connection (100) and the condenser connection (104) are each connected via an electronic switch (TR11, TR12) to the drive control connection (110), and by
• a series circuit which has a bidirectional first electronic switch (TR13, TR14) formed by two electronic switches (TR13, TR14) connected in series and a choke (L1), and connects the battery connection (100) to the condenser connection (104), wherein one end of one of the electronic switches (TR13) of the bidirectional first electronic switch is connected to the condenser connection (104) and one end of the other electronic switch (TR14) of the bidirectional first electronic switch is connected to the battery connection (100) and the other two ends of the two electronic switches (TR13, TR14) of the bidirectional first electronic switch are each connected to one end of the choke (L1),
• wherein one end of the choke (L1) is additionally connected to a second electronic switch (TR15) connected to ground and the other end of the choke (L1) is additionally connected to a further electronic switch (TR16) connected to ground, and
• an electronic control unit which is configured to activate the first electronic switch (TR13, TR14), the second electronic switch (TR15) and the further electronic switch (TR16) connected to ground.

2. The energy supply circuit according to Claim 1, **characterized in that** a first contactor (116) is provided, which can separate a connection to the positive contact of the battery (102), and/or a second contactor (118) which can separate a connection to the positive contact of the condenser (106).

3. The energy supply circuit according to Claim 1 or 2, **characterized in that** the drive control (114) is a three-phase drive control (114) for an asynchronous motor (112).

4. The energy supply circuit according to any one of Claims 1 to 3, **characterized in that** it is produced as a module.

5. A method for operating an energy supply circuit according to any one of Claims 1 to 4 in an operating mode for charging the condenser (106) joined to the condenser connection (104) from a battery (102) joined to the battery connection (100) or vice versa, in which an energy supply circuit according to any one of Claims 1 to 4 is provided and the electronic control unit activates the electronic switches so that
• in a first step, a current from the battery (102) or from the condenser (106) flows through the choke (L1) to ground (108) and a magnetic field is created in the choke (L1),
• in a second step, a current flows through the choke (L1) into the condenser (106) or respectively into the battery (102), wherein the magnetic field is dismantled in the choke (L1), and
• the first and second steps are repeated.

6. The method according to Claim 5, **characterized in that** in an operating mode for charging the condenser (106) from the battery (102)
• in the first step, the electronic switch (TR13) connected to the condenser connection (104) is opened, the electronic switch (TR14) connected to the battery connection (100) is closed, the second electronic switch (TR15) is closed and the further electronic switch (TR16) connected to ground (108) is opened, and
• in the second step, the electronic switch (TR13) connected to the condenser connection (104) is closed, the electronic switch (TR14) connected to the battery connection (100) is closed, the second electronic switch (TR15) is closed and the further electronic switch (TR16) connected to ground (108) is opened.

7. The method according to Claim 5, **characterized in that** in an operating mode for charging the battery (102) from the condenser (106)
• in the first step, the electronic switch (TR13) connected to the condenser connection (104) is closed, the electronic switch (TR14) connected to the battery connection (100) is opened, the second electronic switch (TR15) is opened and the further electronic switch (TR16) connected to ground (108) is closed, and
• in the second step, the electronic switch (TR13) connected to the condenser connection (104) is closed, the electronic switch (TR14) connected to the battery connection (100) is closed, the second electronic switch (TR15) is opened and the further electronic switch (TR16) connected to ground (108) is opened.

8. The method according to Claim 5, **characterized in that** in an operating mode for charging the condenser (106) from the battery (102)
• in the first step, the electronic switch (TR13) connected to the condenser connection (104) is opened, the electronic switch (TR14) connected to the battery connection (100) is closed, the second electronic switch (TR15) is closed and the further electronic switch (TR16) connected to ground (108) is opened, and
• in the second step, the electronic switch (TR13) connected to the condenser connection (104) is closed, the electronic switch (TR14) connected to the battery connection (100) is opened, the second electronic switch (TR15) is opened and the further electronic switch (TR16) connected to ground is closed.

9. The method according to Claim 5, **characterized in that** in an operating mode for charging the battery (102) from the condenser (106)
• in the first step, the electronic switch (TR13) connected to the condenser connection (104) is closed, the electronic switch (TR14) connected to the battery connection (100) is opened, the second electronic switch (TR15) is opened and the further electronic switch (TR16) connected to ground (108) is closed, and
• in the second step, the electronic switch (TR13) connected to the condenser connection is opened, the electronic switch (TR14) connected to the battery connection is closed, the second electronic switch (TR15) is closed and the further electronic switch (TR16) connected to ground (108) is opened.

10. The method according to Claim 8 or 9, **characterized in that** the electronic switch (TR13) connected to the condenser connection (104) and the further electronic switch (TR16) connected to ground (108) are each opened for a first period of time and the electronic switch (TR14) connected to the battery connection and the second electronic switch (TR15) are each opened for a second period of time, wherein the duty factor formed from the first period of time and the second period of time determines the direction of the energy flow from the battery connection (100) to the condenser connection (104) or respectively vice versa.

11. The method for operating an energy supply circuit according to any one of Claims 1 to 4 in an operating mode for charging the condenser (106) joined to the condenser connection (104) from a battery (102) joined to the battery connection (100) or vice versa, in which an energy supply circuit according to any one of Claims 1 to 4 is provided and the electronic control unit activates the electronic switches so that
• in a first step, a current flows from the battery through the choke (L1) into the condenser (106) or vice versa, wherein a magnetic field is created in the choke (L1),
• in a second step, a current flows through the second electronic switch (TR15) and the choke (L1) into the condenser (106) or respectively into the battery (102), wherein the magnetic field is dismantled in the choke (L1), and
• the first and second steps are repeated.

12. The method according to Claim 11, **characterized in that** in an operating mode for charging the condenser (106) from the battery (102)
• in the first step, the electronic switch (TR13) connected to the condenser connection (104) is closed, the electronic switch (TR14) connected to the battery connection (100) is closed, the second electronic switch (TR15) is opened and the further electronic switch (TR16) connected to ground (108) is opened, and
• in the second step, the electronic switch (TR13) connected to the condenser connection (104) is closed, the electronic switch (TR14) connected to the battery connection (100) is opened, the second electronic switch (TR15) is opened and the further electronic switch (TR16) connected to ground (108) is closed.

13. The method according to Claim 11, **characterized in that** in an operating mode for charging the battery (102) from the condenser (106)
• in the first step, the electronic switch (TR13) connected to the condenser connection (104) is closed, the electronic switch (TR14) connected to the battery connection (100) is closed, the second electronic switch (TR15) is opened and the further electronic switch (TR16) connected to ground (108) is opened, and
• in the second step, the electronic switch (TR13) connected to the condenser connection (104) is opened, the electronic switch (TR14) connected to the battery connection (100) is closed, the second electronic switch (TR15) is closed and the further electronic switch (TR16) connected to ground (108) is opened.

14. The method according to any one of Claims 5 to 13, **characterized in that** the electronic switches are activated so that a continual current flow is adjusted through the choke (L1).

## Revendications

1. Circuit d'alimentation en énergie pour alimenter un moteur de transmission d'un chariot de manutention en énergie électrique, présentant
• un connecteur de batterie (100) à relier à la borne positive d'une batterie (102),
• un connecteur de condensateur (104),
• un connecteur de commande d'entraînement (110), qui est relié à une commande d'entraînement (114) d'un moteur d'entraînement (112) du chariot de manutention et est raccordable au connecteur de batterie (100) et au connecteur de condensateur (104), **caractérisé en ce que**
• le connecteur de condensateur (104) est relié à une borne positive d'un condensateur (106) présentant une capacité élevée de 1 Farad ou plus.
• le connecteur de batterie (100) et le connecteur de condensateur (104) sont reliés au connecteur de commande d'entraînement (110) respectivement par un commutateur électronique (TR11, TR12), et **en ce que**
• un circuit en série, qui présente un premier commutateur électronique bidirectionnel (TR13, TR14) formé par deux commutateurs électroniques (TR13, TR14) montés en série et une inductance (L1) et qui relie le connecteur de batterie (100) au connecteur de condensateur (104), dans lequel une extrémité de l'un des commutateurs électroniques (TR13) du premier commutateur électronique bidirectionnel est reliée au connecteur de condensateur (104) et une extrémité de l'autre commutateur électronique (TR14) du premier commutateur électronique bidirectionnel est reliée au connecteur de batterie (100) et les deux autres extrémités des deux commutateurs électroniques (TR13, TR14) du premier commutateur électronique bidirectionnel sont reliées respectivement à une extrémité de l'inductance (L1),
• dans lequel une extrémité de l'inductance (L1) est raccordée en plus à un deuxième commutateur électronique (TR15) relié à la masse et l'autre extrémité de l'inductance (L1) est raccordée en plus à un autre commutateur électronique (TR16) relié à la masse, et
• une unité de commande électronique, qui est conçue pour activer le premier commutateur électronique (TR13, TR14), le deuxième commutateur électronique (TR15) et l'autre commutateur électronique (TR16) relié à la masse.

2. Circuit d'alimentation en énergie selon la revendication 1, **caractérisé en ce qu'**il existe un premier contacteur (116), qui peut interrompre une connexion à la borne positive de la batterie (102), et/ou un second contacteur (118), qui peut interrompre une connexion à la borne positive du condensateur (106).

3. Circuit d'alimentation en énergie selon la revendication 1 ou 2, **caractérisé en ce que** la commande d'entraînement (114) est une commande d'entraînement triphasée (114) d'un moteur asynchrone.

4. Circuit d'alimentation en énergie selon l'une des revendications 1 à 3, **caractérisé en ce qu'**il est fabriqué sous la forme d'un module.

5. Procédé pour faire fonctionner un circuit d'alimentation en énergie selon l'une des revendications 1 à 4 dans un mode opérationnel servant à charger le condensateur (106) raccordé au connecteur de condensateur (104) à partir d'une batterie (102) raccordée au connecteur de batterie (100) ou inversement, dans lequel un circuit d'alimentation en énergie selon l'une des revendications 1 à 4 est mis à disposition et l'unité de commande électronique active les commutateurs électroniques de manière à ce
• qu'un courant circule de la batterie (102) ou du condensateur (106) à travers l'inductance (L1) vers la masse (108) et qu'un champ magnétique s'établisse dans l'inductance (L1) au cours d'une première étape,
• qu'un courant circule à travers l'inductance (L1) dans le condensateur (106) ou encore dans la batterie (102) au cours d'une seconde étape, le champ magnétique s'établissant alors dans l'inductance (L1), et
• que la première étape et la seconde étape se répètent.

6. Procédé selon la revendication 5, **caractérisé en ce que** dans un mode opérationnel servant à charger le condensateur (106) à partir de la batterie (102)
• le commutateur électronique (TR13) relié au connecteur de condensateur (104) est ouvert, le commutateur électronique (TR14) relié au connecteur de batterie (100) est fermé, le deuxième commutateur électronique (TR15) est fermé et l'autre commutateur électronique (TR16) relié à la masse (108) est ouvert au cours d'une première étape, tandis que
• le commutateur électronique (TR13) relié au connecteur de condensateur (104) est fermé, le commutateur électronique (TR14) relié au connecteur de batterie (100) est fermé, le deuxième commutateur électronique (TR15) est fermé et l'autre commutateur électronique (TR16) relié à la masse (108) est ouvert au cours d'une seconde étape.

7. Procédé selon la revendication 5, **caractérisé en ce que** dans un mode opérationnel servant à charger la batterie (102) à partir du condensateur (106)
• le commutateur électronique (TR13) relié au connecteur de condensateur (104) est fermé, le commutateur électronique (TR14) relié au connecteur de batterie (100) est ouvert, le deuxième commutateur électronique (TR15) est ouvert et l'autre commutateur électronique (TR16) relié à la masse (108) est fermé au cours d'une première étape, tandis que
• le commutateur électronique (TR13) relié au connecteur de condensateur (104) est fermé, le commutateur électronique (TR14) relié au connecteur de batterie (100) est fermé, le deuxième commutateur électronique (TR15) est ouvert et l'autre commutateur électronique (TR16) relié à la masse (108) est ouvert au cours d'une seconde étape.

8. Procédé selon la revendication 5, **caractérisé en ce que** dans un mode opérationnel servant à charger le condensateur (106) à partir de la batterie (102)
• le commutateur électronique (TR13) relié au connecteur de condensateur (104) est ouvert, le commutateur électronique (TR14) relié au connecteur de batterie (100) est fermé, le deuxième commutateur électronique (TR15) est fermé et l'autre commutateur électronique (TR16) relié à la masse est ouvert au cours d'une première étape, tandis que
• le commutateur électronique (TR13) relié au connecteur de condensateur (104) est fermé, le commutateur électronique (TR14) relié au connecteur de batterie (100) est ouvert, le deuxième commutateur électronique (TR15) est ouvert et l'autre commutateur électronique (TR16) relié à la masse est fermé au cours d'une seconde étape.

9. Procédé selon la revendication 5, **caractérisé en ce que** dans un mode opérationnel servant à charger la batterie (102) à partir du condensateur (106)
• le commutateur électronique (TR13) relié au connecteur de condensateur (104) est fermé, le commutateur électronique (TR14) relié au connecteur de batterie (100) est ouvert, le deuxième commutateur électronique (TR15) est ouvert et l'autre commutateur électronique (TR16) relié à la masse (108) est fermé au cours d'une première étape, tandis que
• le commutateur électronique (TR13) relié au connecteur de condensateur est ouvert, le commutateur électronique (TR14) relié au connecteur de batterie est fermé, le deuxième commutateur électronique (TR15) est fermé et l'autre commutateur électronique (TR16) relié à la masse (108) est ouvert au cours d'une seconde étape.

10. Procédé selon la revendication 8 ou 9, **caractérisé en ce que** le commutateur électronique (TR13) relié au connecteur de condensateur (104) et l'autre commutateur électronique (TR16) relié à la masse (108) sont respectivement ouverts pendant une première période, tandis que le commutateur électronique (TR14) relié au connecteur de batterie et le deuxième commutateur électronique (TR15) sont respectivement ouverts pendant une seconde période, dans lequel le rapport cyclique formé par la première période et la seconde période détermine la direction du flux d'énergie du connecteur de batterie (100) vers le connecteur de condensateur (104) ou inversement.

11. Procédé servant à faire fonctionner un circuit d'alimentation en énergie selon l'une des revendications 1 à 4 dans un mode opérationnel servant à charger le condensateur (106) raccordé au connecteur de condensateur (104) à partir d'une batterie (102) raccordée au connecteur de batterie (100) ou inversement, dans lequel un circuit d'alimentation en énergie selon l'une des revendications 1 à 4 est mis à disposition et l'unité de commande électronique active les commutateurs électroniques de manière à ce
• qu'un courant circule de la batterie à travers l'inductance (L1) dans le condensateur (106) ou inversement au cours d'une première étape, un champ magnétique s'établissant alors dans l'inductance (L1),
• qu'un courant circule à travers le deuxième commutateur électronique (TR15) et l'inductance (L1) dans le condensateur (106) ou encore dans la batterie (102) au cours d'une seconde étape, le champ magnétique s'établissant alors dans l'inductance (L1), et
• que la première étape et la seconde étape se répètent.

12. Procédé selon la revendication 11, **caractérisé en ce que** dans un mode opérationnel servant à charger le condensateur (106) à partir de la batterie (102)
• le commutateur électronique (TR13) relié au connecteur de condensateur (104) est fermé, le commutateur électronique (TR14) relié au connecteur de batterie (100) est fermé, le deuxième commutateur électronique (TR15) est ouvert et l'autre commutateur électronique (TR16) relié à la masse (108) est ouvert au cours d'une première étape, tandis que
• le commutateur électronique (TR13) relié au connecteur de condensateur (104) est fermé, le commutateur électronique (TR14) relié au connecteur de batterie (100) est ouvert, le deuxième commutateur électronique (TR15) est ouvert et l'autre commutateur électronique (TR16) relié à la masse (108) est fermé au cours d'une seconde étape.

13. Procédé selon la revendication 11, **caractérisé en ce que** dans un mode opérationnel servant à charger la batterie (102) à partir du condensateur (106)
• le commutateur électronique (TR13) relié au connecteur de condensateur (104) est fermé, le commutateur électronique (TR14) relié au connecteur de batterie (100) est fermé, le deuxième commutateur électronique (TR15) est ouvert et l'autre commutateur électronique (TR16) relié à la masse (108) est ouvert au cours d'une première étape, tandis que
• le commutateur électronique (TR13) relié au connecteur de condensateur (104) est ouvert, le commutateur électronique (TR14) relié au connecteur de batterie (100) est fermé, le deuxième commutateur électronique (TR15) est fermé et l'autre commutateur électronique (TR16) relié à la masse (108) est ouvert au cours d'une seconde étape.

14. Procédé selon l'une des revendications 5 à 13, **caractérisé en ce que** les commutateurs électroniques sont activés de manière à ce qu'un flux de courant électrique continu soit produit à travers l'inductance (L1).
